# EUROPÄISCHE PATENTANMELDUNG

(11) **EP 2 275 195 A2**
(43) Veröffentlichungstag der Anmeldung: **19.01.2011**
(21) Anmeldenummer: 10012428.8
(22) Anmeldetag: 28.11.2007
(51) Int. Cl.: B01F 7/00, B01F 7/16, C02F 1/50

(54) **Verfahren zur Behandlung von Ballastwasser mit wässrigen Acroleinlösung**

(30) Priorität: 03.04.2007 DE 202007004912 U
(62) Teilanmeldung aus: 07846862.6
(71) Anmelder: Blum, Holger, 9053 Teufen AR (CH)
(72) Erfinder: Blum, Holger, 9053 Teufen AR (CH)
(74) Vertreter: Kirschner, Klaus Dieter

(57) **Zusammenfassung**

Ein Verfahren zur Behandlung von Ballastwasser mit wässriger Acroleinlösung unter Verwendung von Acroleinacetal (AC) und Katalysatorsäure (HX) die in einem Reaktionsgefäß gemischt und zur Reaktion gebracht werden ist dadurch gekennzeichnet, dass das Acroleinacetal (AC), die Katalysatorsäure (HX) mit Hydrolysewasser (W) über separate außen an dem Reaktorgefäß angebrachte Zulauföffnungen in das Reaktorgefäß zur Erzeugung einer wässrigen Acroleinlösung zugegeben und durch ein Intensivrührwerk verrührt werden, dass das Ballastwasser mittels einer Druckerhöhungspumpe (VP) durch eine Wasserstrahlpumpe (Z) gepumpt wird, und dass die wässrige Acroleinlösung von dem Reaktorgefäß über eine Verbindungsleitung zwischen dem Reaktionsgefäß und der Unterdruckzone der Wasserstrahlpumpe in die Unterdruckzone der Wasserstrahlpumpe hydraulisch über ein Stellventil (SV) eingeleitet wird.

## Beschreibung

Die Erfindung betrifft ein Verfahren zur Behandlung von Ballastwasser mit wässriger Acroleinlösung.

Es ist bereits bekannt, dass Ballastwasser auf Schiffen desinfiziert werden kann durch den Einsatz von Acrolein. Das Dokument "Ballast Water Treatment R & D Directory" 2te Ausgabe, November 2004 herausgegeben von der International Maritime Organization, London, beschreibt auf der Seite 61 wie mittels Zugabe von 1 bis 15 ppm Acrolein zum Ballastwasser der Transfer von Bakterien, Algen, Zebra-Muscheln und anderen Organismen des Zooplanktons von einem Hafen zum anderen sicher unterbunden werden kann.

Der Vorteil des Acroleineinsatzes ist die Nachhaltigkeit insbesondere gegenüber Larven von Zebramuscheln, und die Tatsache, dass das Acrolein sich nach einigen Tagen von selbst abbaut, d.h. beim Ablassen des Ballastwassers im Zielhafen tritt keine emeute Belastung des Hafenbeckens durch dieses Biozid auf.

Diesen nachgewiesenen Vorteilen steht gegenüber, dass die Handhabung, der Transport und die Lagerung vom reinem Acrolein auf Schiffen nicht durchgeführt werden kann, weil Acrolein eine hochgiftige Flüssigkeit mit Tränengaswirkung darstellt und das Bordpersonal gezwungen wäre, die Handhabung dieses Biozids nur mit vollständiger ABC-Schutzbekleidung und unter Verwendung von Gasmasken durchzuführen.

Wässrige Lösungen von Acrolein sind nicht giftig und lassen sich sicher handhaben, jedoch beträgt die Haltbarkeit dieser Lösungen nur wenige Tage, so dass der Einsatz auf Schiffen wegen der logistischen Probleme unmöglich ist.

Es hat nicht an Versuchen gefehlt, die aufgeführten Schwierigkeiten bei dem Umgang mit Acrolein dadurch zu umgehen, dass statt Acrolein selber ein mindergefährliches Derivat des Acrolein eingesetzt wird:
US-A-5,183,944 schlägt vor, statt Acrolein ein ungiftiges wasserlösliches Acroleinacetal am Ort des Verbrauchs mit einer wässrigen Säurelösung zu zersetzen und dann das aus dem Acetal freigesetzte Acrolein mittels eines Inertgasstroms aus dem Reaktionsgemisch auszutreiben. Der Acroleinhaltige Inertgasstrom dient dann zu Wasserbehandlung. Zum Einsatz dieses Verfahrens an Bord eines Schiffes müssen abgesicherte doppelwandige Leitungen für das hochgiftige Acrolein-Gasgemisch verlegt werden.

Beim Einspülen des Acroleinhaltigen Gases in die Ballastwassertanks tritt das Inertgas aus den Belüftungsrohren des Ballastwassertanks aus und enthält dabei noch so viel Restacrolein, dass eine Arbeit an Deck wegen des Tränengaseffektes unmöglich ist und ein gefährlicher Betriebszustand entsteht. Bei dem Verfahren nach US Patent 5183944 entsteht außerdem ein wasserhaltiges Restprodukt, welches an Bord eines Schiffes nur schwierig zu entsorgen ist.

US-A-5,560,833 schlägt vor den Einsatz einer alkoholischen Lösung von Acroleinacetal und Säurespaltung unter Bildung von Acroleinlösung am Ort des Verbrauchs. In Isopropylalkohol gelöstes Acroleinacetal und verdünnte 10%ige Mineralsäure werden unter Druck in einer Rohrschlange zu einer homogenen Reaktionslösung gemischt. Anschließend wird die Mischung bei laminarer Strömung langsam durch einen Haltetank geleitet, bis die Deacetalisierung des Acroleinacetals vollständig abgeschlossen ist.

In einem anderen Ausführungsbeispiel des Patentes US-A-5,560,833 wird statt des Haltetanks ein rohrförmiger Durchlaufmischer ohne hohe innere Turbulenz mit langsam laufenden Mehrfachrührwerk als Haltetank benutzt. Die Rohrschlange für die Vermischung der alkoholischer Acetallösung und der verdünnten Mineralsäure ist in diesem Beispiel als innerer Einbau axial in dem rohrförmigen Rührmischer angebracht.

Die Durchführung dieses Verfahrens zur Herstellung von Acrolein an Bord eines Schiffes setzt voraus, dass vor Ort eine Vormischung aus Isopropylalkohol und Acetal sowie eine Vormischung aus konzentrierter Mineralsäure und Wasser hergestellt wird. Diese beiden Vormischungen müssen, um gebrauchsfertig zu werden, gemäß Patentvorschrift US-A-5,560,833 noch jeweils in ein Druckfass umgefüllt werden.

Für beide Operationen ist an Bord eines Seeschiffes kein ausgebildetes Personal vorhanden. Dazu kommt die Feuergefahr durch Handhabung von leichtflüchtigen, brennbaren C1 bis C3-Alkoholen ohne Schutzgas. Die Nacharbeitung der Verfahren nach US-A- 5,560,833 ergab überdies, dass die vorgeschlagenen Apparaturen, wenn sie nicht aus Glas bestanden, sondern wie üblich aus säurebeständigem Edelstahl hergestellt waren, nur eine kurze Standzeit hatten und dann unbrauchbar wurden.

Nach kurzer Betriebszeit der Vorrichtung gemäß US-A-5,560,833 bildete sich auf den flüssigkeitsbenetzten Wänden der aus Edelstahl hergestellten Haltetanks und rohrförmigen Rührmischern harzartige Beläge von Bisacrolein und anderen Kondensationsprodukten des Acroleins. Diese nachteilige Erscheinung trat insbesondere auf an Stellen mit laminarer Strömung und nur geringer Turbulenz.

Auf Grund der vorgenannten Nachteile sind die bisher vorgeschlagenen Vorrichtungen nach US-A-5,183,944 und US-A-5,560,833 für die Behandlung von Ballastwasser mit Acrolein an Bord von Schiffen nicht verwendbar.

Es ist die Aufgabe der Erfindung, ein Verfahren bereit zu stellen, mit dem Ballastwasser an Bord von Schiffen mit Acrolein behandelt werden kann, ohne dass gefährliche Betriebszustände entstehen und/oder Vormischungen erzeugt werden müssen.

Zur Lösung dieser Aufgabe hat das erfindungsgemäße Verfahren die Merkmale von Anspruch 1. Vorteilhafte Ausgestaltungen der Erfindung sind in den Unteransprüchen charakterisiert.

Durch das erfindungsgemäße Verfahren wird in vorteilhafter Weise eine überaus zuverlässige und störungsfreie Behandlung von Ballastwasser mit einer verdünnten wässrigen Lösung von Acrolein erreicht.

Ein weiterer Vorteil des erfindungsgemäßen Verfahrens besteht darin, dass es in einer einfach aufgebauten Vorrichtung durchgeführt werden kann. Die Vorrichtung weist eine Druckerhöhungspumpe die das Ballastwasser durch eine Wasserstrahlpumpe pumpt, und die Unterdruckzone der Wasserstrahlpumpe ist hydraulisch über ein Stellventil verbunden mit einem nichtrunden Reaktionsgefäß, welches keine stationären inneren Einbauten, sondem nur ein exzentrisch angeordnetes Intensiv-Rührwerk, sowie außen angebrachte separate Zulauföffnungen fürAcroleinacetal, Säure und Hydrolysewasser aufweist.

Ein weiterer Vorteil besteht darin, dass an keiner Stelle innerhalb der Vorrichtung zur Durchführung des Verfahrens reines Acrolein auftritt, was eine zusätzliche Sicherung gegen das Auftreten von gefährlichen Betriebszuständen bedeutet. Auch bei schwankendem oder Stoßweißem Zufluss von Ballastwasser ist die sichere Durchführung des Verfahrens gewährleistet. Da das nichtrunde Reaktionsgefäß, in dem die Deacetalisierung stattfindet, stets vollständig geflutet ist, ist die einwandfreie Durchführung des Verfahrens auch bei schwerem Seegang nicht beeinträchtigt.

Die exzentrische Anordnung des Intensiv-Rührwerkes bewirkt in vorteilhafter Weise, dass sich in dem nichtrunden Reaktionsgefäss auch bei hoher eingebrachter Rührleistung keine Rührtrombe bildet und damit eine der Hauptursachen für das Auftreten von harzartigen Belägen auf den metallischen Wänden der Apparatur beseitigt ist.

Bei dem erfindungsgemäßen Verfahren zur Behandlung von Ballastwasser mit Acrolein regelt ein einziges Stellventil in der Verbindungsleitung zwischen dem nichtrunden Reaktionsgefäß und der Unterdruckzone der Wasserstrahlpumpe den Zufluss der wässrigen Acroleinlösung. Nach einer vorteilhaften Ausgestaltung der Erfindung wird als Stellventil ein Sicherheitsventil mit einstellbarem Öffnungsdruck verwendet, wodurch gewährleistet ist, dass Acroleinlösung nur dann zur Unterdruckzone fließt, wenn die Druckerhöhungspumpe arbeitet.

Ausführungsbeispiele der Erfindung werden an Hand der beigefügten Zeichnungen erläutert, in denen:
- Fig. 1: schematisch das nichtrunde Reaktionsgefäß in Form des geschlossenen Kastens mit dem darin befindlichem exzentrisch angeordnetem Intensivrührer zeigt,
- Fig. 2: schematisch das perspektivische Fliessschema der erfindungsgemäßen Vorrichtung zur Behandlung von Ballastwasser mit Acrolein zeigt, und
- Fig. 3: schematisch den Zufluss von Hydrolysewasser in den Kasten zeigt.

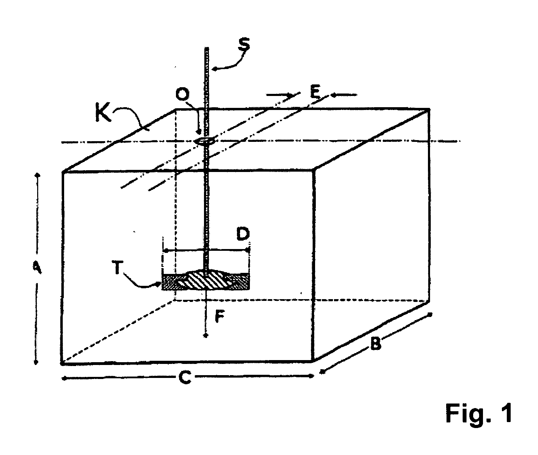

Wie aus Figur 1 zu ersehen ist weist das nichtrunde Reaktionsgefäß die Form eines geschlossenen Kastens K auf. Der Kasten K hat die Höhe A, die Breite B und die Länge C und weist keine stationären inneren Einbauten auf. Das Intensiv-Rührelement T ist mit der Rührwelle S starr verbunden. Die Rührwelle S ragt durch die Öffnung O im Kastendeckel. Die Rührwelle S und damit das Rührelement T ist im Abstand E exzentrisch von der halben Kastenlänge C angeordnet. Das Rührelement hat den Durchmesser D und ist im Abstand F vom Kastenboden positioniert.

Die Drehzahl des Rührelementes T ist variierbar, so dass eine mechanische Rührleistung von mindestens 500 Watt pro Kubikmeter Kastenvolumen erzeugt werden kann. Der Kasten K ist vollständig mit Reaktionsflüssigkeit gefüllt und auf Grund der hohen Turbulenz ohne Trombenbildung und auf Grund der Abwesenheit stationärer innerer Einbauten findet im Kasten K keine Harzbildung aus dem freigesetzten wässrigen Acrolein statt.

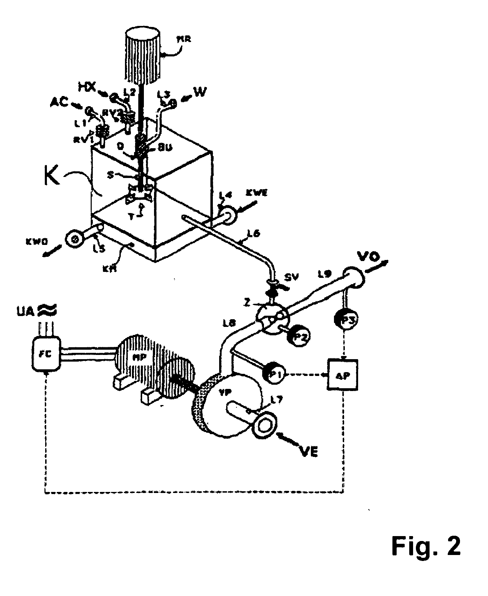

Die Einzelheiten der Vorrichtung sind Figur 2 zu entnehmen. Wie aus Figur 2 zu ersehen ist fließt der Strom VE (Volumen/Zeiteinheit) des mit Acrolein zu behandelnden Ballastwassers durch die Leitung L7 in den Ansaugstutzen der Druckerhöhungspumpe VP. Durch die Druckleitung L8 fließt das Ballastwasser in die Wasserstrahlpumpe Z und vermischt sich mit der angesaugten wässrigen Acroleinlösung, die durch das Stellventil SV in die Unterdruckzone von der Wasserstrahlpumpe Z eintritt. Das mit Acrolein behandelte Ballastwasser tritt durch die Leitung L9 als Strom VO (Volumen/Zeiteinheit) aus der Vorrichtung aus.

Die Drehzahl der Druckerhöhungspumpe VP ist variierbar, indem beispielsweise der Antriebsmotor MP ein Drehstrommotor ist, dessen Umdrehungszahl durch einen Frequenzumrichter FC gesteuert wird, wodurch eine wirkungsvolle Regelung des Eintrittdrucks in die Wasserstrahlpumpe erreicht wird und die Steuerung der erfindungsgemäßen Vorrichtung durch analoge oder digitale Rechenanlagen in einfacher Weise durchgeführt werden kann. Dieser Frequenzumrichter ist an die Kraftstromleitung AC angeschlossen und erhält sein Steuersignal in Form von einem Signalstrom z.B. 4-20 mA oder in Form einer Signalspannung 0 bis 5 Volt von dem mit ΔP in Figur 2 bezeichnetem Regler und Messumformer.

Die Regeleinrichtung ΔP ist mit zwei Drucksensoren P1 und P3 verbunden. Der Messumformer der Regeleinrichtung ΔP berechnet aus den Eingangssignalen von P1 und P3 den Differenzdruck und vergleicht diesen Differenzdruck mit einem eingestellten Sollwert. Die Abweichung Sollwert -Istwert wird als Regelsignal an den Frequenzumrichter FC gegeben. Durch diesen Regelkreis ist gewährleistet, dass auch bei schwankendem Zufluss von Ballastwasser der Druck P2 in der Unterdruckzone der Wasserstrahlpumpe Z einen Mindestwert nicht überschreitet und die Zuführung der wässrigen Acroleinlösung zum Ballastwasser gleichmäßig und ohne Störungen abläuft.

Wie man aus Figur 2 erkennt, ist die Unterdruckzone der Wasserstrahlpumpe Z über das Stellventil SV hydraulisch mittels der an dem Kasten K angeschweißten Ablaufleitung L6 verbunden. Reaktionsflüssigkeit aus dem Kasten K fließt über die Leitung L6 in die Wasserstrahlpumpe infolge des Druckgefälles zwischen dem im Innern des Kastens K herrschenden geringem Überdruck und dem Unterdruck P2 in der Unterdruckzone der Wasserstrahlpumpe Z.

Durch diese Ausgestaltung der Vorrichtung kann auf eine separate Förderpumpe für die verdünnte wässrige Acroleinlösung verzeichnet werden, wodurch die Betriebssicherheit der Vorrichtung bedeutend gesteigert wird.

Der Kasten K weist einen äußeren Kühlmantel KM auf mit dem Zuflussstutzen L4 für Kühlmittelstrom KWE und einem Kühlmittelaustrittsstutzen L5 für den abfließenden Kühlmittelstrom KWO. Als Kühlmittel kann Wasser oder eine andere gebräuchliche Kühlflüssigkeit dienen.

Wie man erkennt, weist der Kasten K keinerlei stationäre innere Einbauten auf, sondern nur das exzentrisch zur Kastenlängsachse angeordnete Rührwerk bestehend aus dem Rührelement T, hier als Rührturbine gezeichnet und der Rührwelle S, die mit dem Antriebsmotor MR verbunden ist.

Die Öffnung O für die Rührwelle S im oberen Kastendeckel hat einen etwas größeren Lochdurchmesser als die Rührwelle S. Die Rührwelle ist axial zentrisch zum Lochkreis von der Öffnung O ausgerichtet. Durch den Ringspalt zwischen der Öffnung O und der Rührwelle S fließt das zur Hydrolyse des Acroleinacetals notwendige Hydrolysewasser W. Die im innern hohle Dichtbuchse BU ist flüssigkeitsdicht auf dem Kastendeckel angeschraubt und am oberen Ende gegen die Rührwelle S durch eine Stopfbuchspackung oder eine Gleitringdichtung gegen den Austritt von Wasser oder Reaktionsflüssigkeit aus dem Kasten K abgedichtet. Durch den Rohrstutzen an der Dichtbuchse BU der Rührwelle S gelangt das Hydrolysewasser an den Ringspalt und bildet so einen Sperrwasserkreis gegen den Austritt der wässrigen Acroleinlösung aus dem Kasten K.

Die Zuleitung L3 für das kontinuierlich zufließende Hydrolysewasser W ist an die Dichtbuchse BU angeschraubt. Durch diese Ausgestaltung des Zulaufs dient das Hydrolysewasser W gleichzeitig als Sperrwasser für die mechanische Abdichtung der Rührwelle S gegen den Kasten K.

Wie man erkennt, weist der Kastendeckel zwei weitere Zuflussöffnungen auf, die möglichst weit entfernt sind von der Abflussleitung L6. Eine Zuflussleitung L2 versorgt den Kasten K kontinuierlich mit der zur Spaltung des Acroleinacetals notwendigen Säure HX. Eine Zuflussleitung L1 versorgt den Kasten K kontinuierlich mit Acroleinacetal. Um zu verhindern, dass Flüssigkeit aus dem Kasten K in die Förderleitungen L1 und L2 eindringt, sind beide Leitungen mit Rückschlagventilen RV1 und RV2 versehen.

In der Praxis wird der Druck in der Zuflussleitung L3 für das Hydrolysewasser W einige Bar sein, so dass in dieser Zuflussleitung auf ein Rückschlagventil verzichtet werden kann.

Beim Anfahren der Vorrichtung und während der Behandlung des Ballastwassers mit wässriger Acroleinlösung bleibt die Zuflussmenge/Zeiteinheit des Hydrolysewassers fest eingestellt. Dadurch ist sichergestellt, dass der Kasten K und die Leitung L6 zu Beginn des Betriebes vollständig mit Wasser gefüllt sind. Dann wird das Rührwerk MR eingeschaltet. Sobald die Druckerhöhungspumpe VP eingeregelt ist und der Unterdruck P2 den vorgeschriebenen Wert erreicht hat, wird mit der kontinuierlichen Zufuhr von Säure HX durch die Zuleitung L2 zum Kasten K begonnen. Als Deacetalisierungssäure kann eine Säure verwendet werden, wie in der US-A-5,183,944 angegeben ist. Nach Ablauf von einigen Minuten seit Beginn der Säurezufuhr wird die (nicht eingezeichnete) Förderpumpe für Acroleinacetal AC in Betrieb genommen und dieses durch die Zuleitung L1 in den Kasten K gepumpt.

Nach Beendigung der Ballastwasserbehandlung werden die Zuflüsse für AC, HX und W in umgekehrter Reihenfolge abgeschaltet, wodurch gewährleistet ist, dass die Vorrichtung zum Schluss wieder nur mit Wasser gefüllt ist.

Sollte während des Ballastbetriebes eine Störung eintreten, beispielsweise durch Ausfall der Pumpe VP und in deren Folge der Unterdruck P2 den vorgeschriebenen Wert überschreiten, so wird durch eine (nicht eingezeichnete) Sicherheitsschaltung die Zuflüsse von AC und HX zum Kasten K abgeschaltet.

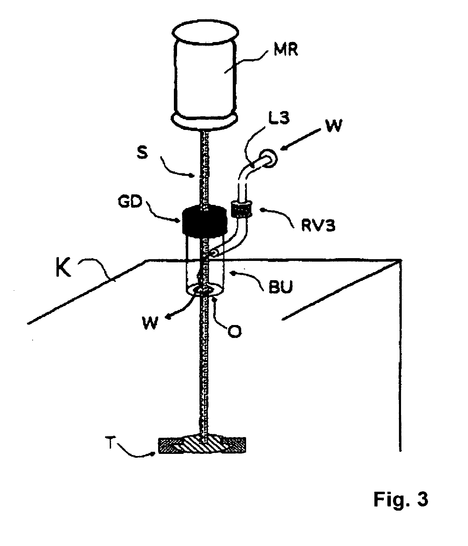

Einzelheiten für den Sperrwasserkreis und den Zufluss von Hydrolysewasser W in den Kasten K der erfindungsgemäßen Vorrichtung sind Figur 3 zu entnehmen. Wie man in der Abbildung erkennt ist die auf den Kasten K flüssigkeitsdicht aufgesetzte Buchse BU als Hohlzylinder ausgebildet. Am oberen Ende der Buchse BU ist die mechanische Abdichtung GD gegen die Rührwelle S angebracht. GD kann eine Stopfbuchse mit Packungsringen oder Vorteilhafterweise eine Gleitringdichtung sein.

Die Buchse BU weist seitlich eine Einschrauböffnung oder einen Flanschstutzen auf, an dem die Zuleitung L3 für das Hydrolysewasser W flüssigkeitsdicht montiert ist.

Hydrolysewasser W wird durch die Rohrleitung L3 über das Rückschlagventil RV3 seitlich in die Buchse BU eingepresst, umfließt die Rührwelle nach unten in Richtung des Ringspalts, gebildet aus der Öffnung O im Kastendeckel und der axial zentrisch in der Öffnung O positionierten Rührwelle S, und gelangt so in das Innere des Kastens K.

Durch die erzwungenen eindeutigen Strömungsverhältnisse im Ringspalt kann Reaktionslösung nicht aus dem Innern des Kastens K in das Innere der Buchse BU gelangen.

Sollte die Dichtung GD versagen so wird stets Wasser W aus der Vorrichtung austreten aber keine Reaktionslösung.

## Patentansprüche

**1.** Verfahren zur Behandlung von Ballastwasser mit wässriger Acroleinlösung unter Verwendung von Acroleinacetal (AC) und Katalysatorsäure (HX) die in einem Reaktionsgefäß gemischt und zur Reaktion gebracht werden **dadurch gekennzeichnet, dass** das Acroleinacetal (AC), die Katalysatorsäure (HX) mit Hydrolysewasser (W) über separate außen an dem Reaktorgefäß angebrachte Zulauföffnungen in das Reaktorgefäß zur Erzeugung einer wässrigen Acroleinlösung zugegeben und durch ein Intensivrührwerk verrührt werden, dass das Ballastwasser mittels einer Druckerhöhungspumpe (VP) durch eine Wasserstrahlpumpe (Z) gepumpt wird, und dass die wässrige Acroleinlösung von dem Reaktorgefäß über eine Verbindungsleitung zwischen dem Reaktionsgefäß und der Unterdruckzone der Wasserstrahlpumpe in die Unterdruckzone der Wasserstrahlpumpe hydraulisch über ein Stellventil (SV) eingeleitet wird.

**2.** Verfahren nach Anspruch 1, **dadurch gekennzeichnet, dass** als Intensivrührwerk (T) einen exzentrisch angeordneten Turbinenrührer verwendet wird.

**3.** Verfahren nach Anspruch 1, **dadurch gekennzeichnet, dass** als Intensivrührwerk (T) von einem Elektromotor angetrieben wird, deesen Drehzahl durch einen Frequenzumrichter eingestellt wird.

**3.** Verfahren nach Anspruch 1, **dadurch gekennzeichnet, dass** das Hydrolysewasser über einen Ringspalt zwischen der Rührwelle (S) und der Öffnung (O) für die Rührwelle im Kastendeckel als Zulauföffnung zugeführt wird.

**4.** Verfahren nach Anspruch 1 **dadurch gekennzeichnet, dass** als Zuflussöffnungen für Acroleinacetal und für Katalysatorsäure Rohrstutzen verwendet werden, und dass durch Rückschlagventile auf den Rohrstutzen verhindert wird, dass wässrige Acroleinlösung aus dem Reaktorgefäß in die Zuleitungen für Acroleinacetal und für Katalysatorsäure gelangt.

**5.** Verfahren nach Anspruch 1 **dadurch gekennzeichnet, dass** die Zuflussmenge/Zeiteinheit des Hydrolysewassers während der Behandlung des Ballastwassers fest eingestellt wird.

**6.** Verfahren nach Anspruch 1 **dadurch gekennzeichnet, dass** das Reaktorgefäß vollständig mit Flüssigkeit gefüllt wird

**7.** Verfahren nach Anspruch 1, **dadurch gekennzeichnet, dass** der Zufluss von Acroleinacetal und Katalysatorsäure zum Reaktorgefäß durch eine elektrische oder pneumatische Steuerung unterbrochen wird, wenn (a) der Druck in der Unterdruckzone der Wasserstrahlpumpe einen bestimmten Wert überschreitet oder wenn (b) der Zufluss von Hydrolysewasser unterbrochen wird oder wenn (c) der Antriebsmotor des Intensivrührwerks stillsteht.

**8.** Verfahren nach Anspruch 1, **dadurch gekennzeichnet, dass** die Druckerhöhungspumpe (VP) durch einen mittels Frequenzumrichter (FC) gesteuerten Elektromotor (MP) angetrieben wird.

**9.** Verfahren nach Anspruch 8, **dadurch gekennzeichnet, dass** die Drehzahl der Druckerhöhungspumpe in Abhängigkeit von Prozessgrößen der Vorrichtung zur Behandlung von Ballastwasser mit Acrolein durch eine Regeleinrichtung geregelt wird.

**10.** Verfahren nach Anspruch 9, **dadurch gekennzeichnet, dass** die Prozessgröße die Druckdifferenz zwischen Zu- und Austritt aus der Wasserstrahlpumpe ist.

**11.** Verfahren nach Anspruch 9, **dadurch gekennzeichnet, dass** die Regeleinrichtung (ΔP) die Druckdifferenz mit mindestens zwei Drucksensoren und einen Messumformer bestimmt, einen Soll-Istwert-Vergleich durchführt und ein resultierendes Regelsignal an die Motor-Drehzahlsteuerung abgibt.
